# EUROPEAN PATENT APPLICATION

(11) **EP 0 572 248 A1**
(43) Date of publication of application: **01.12.1993**
(21) Application number: 93304106.3
(22) Date of filing: 26.05.1993
(51) Int. Cl.: B29C 43/36, B29C 67/14, B29D 31/00

(54) **Manufacture of articles from composite material**

(30) Priority: 28.05.1992 GB 9211263
(71) Applicant: BRITISH AEROSPACE PUBLIC LIMITED COMPANY, Farnborough, Hants. GU14 6YU (GB)
(72) Inventor: France, David, British Aerospace Defence Ltd., Balderstone, Lancashire BB2 7LF (GB); Booth, Derrick, British Aerospace Defence Ltd., Balderstone, Lancashire BB2 7LF (GB); Bunting, Hedley, British Aerospace Defence Ltd., Balderstone, Lancashire BB2 7LF (GB); Duffy, Roger, British Aerospace Defence Ltd., Balderstone, Lancashire BB2 7LF (GB)
(74) Representative: Eastmond, John

(57) **Abstract**

This invention relates to the forming of hollow articles, such as an aircraft wing (2) to a required shape. This forming is done by using a blow bag (14) which is positioned in the hollow of the wing, and outer skins (4 and 6) thereof being positioned against respective mould tools (10 and 12). During the curing process of the wing, fluid pressure is applied to the vacuum bag (14) to ensure that the wing takes the correct shape and dimensions. Known blow bags were manufactured from castable rubber which was not self-supporting, and therefore required a frame (16) to prevent them collapsing. This frame is believed to have caused damage to the blow bag (14), resulting in premature failure of the bags. The present invention provides a self-supporting blow bag comprising two different types of material one relatively stiff and the other flexible, obviating the requirement for a frame.

## Description

This invention relates to a method and apparatus for forming a hollow article to a required shape and in particular for manufacturing aircraft wings or similar panel type assemblies.

One method of making strong yet lightweight aircraft wings and the like from composite materials, such as carbon fibre pieces suspended in resin, is to fabricate them from separately formed top and bottom skins, which define the aerodynamic outer surfaces of the wing, and a plurality of beams which extend substantially perpendicularly from the internal surface of one skin to the internal surface of the other. The constituent parts of the wing are manufactured separately by laying up successive layers of composite material on an appropriately shaped mould tool to a desired thickness. Each part is then cured and formed by the application of gas pressure at high temperature in an autoclave for a predetermined, suitable period of time. When the curing process is finished, each cured part is removed and wing assembly can be commenced. However, on assembling the wing from the constituent parts, it is often found that the distance between the respective outermost surfaces of the top and bottom skins is not in accordance with the specification. This is due to the cumulative manufacturing error in each of the parts. Since the parts are at this stage fully cured and formed corrective action is difficult.

In order to reduce these problems it has been proposed to cure all of the parts of the wing in a single operation and in their assembled but not finally formed configuration.

One method of manufacturing a wing in this way is described in Aircraft Engineering, Vol. 59, No. 1, January 1987, pages 10-13, London, GB; D Rose: "CFRP-Wing for Alpha Jet". In the described method the wing in its assembled state is placed in an autoclave with appropriately sized pieces of thermal expansive rubber positioned in the spaces defined between the top and bottom skins and the support beams. As the autoclave heats up, the rubber pieces expand and indirectly press against the various parts of the wing, thereby forming and maintaining the desired shape. A stiffener passes along a longitudinal axis of each of the pieces of thermal expansive rubber.

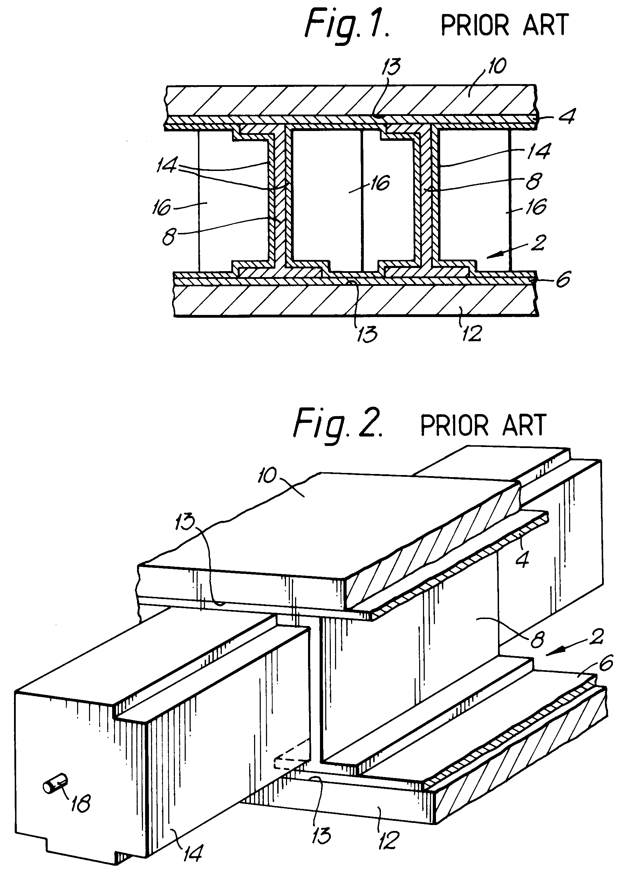

Another known method of performing this operation is shown in Figures 1 and 2 of the accompanying drawings. It can be seen that the assembled but unformed and uncured composite wing 2, comprising a top skin 4, a bottom skin 6 and a plurality of l-shaped support beams 8, is positioned between upper and lower mould tools 10 and 12 in an autoclave (not shown). A so-called blow bag 14 is positioned in the space defined by the top and bottom skins 4 and 6, and each pair of support beams 8. The blow bags 14 allow gas pressure to be applied to the interior surfaces of the skins and support beams as the wing cures as a result of heating by the autoclave. This pressure ensures that the skins 4 and 6 are finally formed with the correct shape and dimensions (as defined by skin contacting mould surfaces 13 of the mould tools 10 and 12) and further that the support beams 8 are formed with the correct height to connect the two skins. The blow bags 14 are made from castable rubber, known as "wacker". In order to ensure that these bags maintain their basic shape a metal frame 16 is positioned therein. Gas pressure is applied to each of the bags 14 by way of an inlet/outlet nozzle 18. Experience has shown that such blow bags are prone to splitting, particularly at temperatures above 120°C, which temperature is that above which the curing operation cannot be aborted and restarted. One of the reasons that these blow bags are prone to failure is thought to be that the metal frames 16 cause damage to the bags as they are manipulated during insertion and removal from the wing cavities. In this known method, in order to ensure that the horizontal flanges of the support beams 8 are formed accurately to the skins 4 and 6, shim materials must be used. Such shims add undesirable weight to the final assembly and their insertion adds time to the manufacturing process.

It is an object of the present invention to provide an improved apparatus for forming hollow articles to a required shape using a blow bag that is self-supporting, and which does not require a frame.

It is another object of the invention to provide a blow bag which is composed of materials less prone to failure at temperatures required for curing composite components.

It is a further object of the invention to provide apparatus and methods of forming aircraft wing assemblies in which shim materials between support beams and skins are not required.

According to a first aspect of the present invention there is provided apparatus for forming a hollow article to a required shape, the apparatus being for insertion in use in the hollow of the article, characterised in that the apparatus includes at least one sheet of flexible material, at least one sheet of relatively rigid material connected contiguously to said at least one sheet of flexible material, and an aperture in said contiguously connected sheets so as to form an expandable enclosure such that, in use, when fluid pressure is applied to the interior of the enclosure via said aperture, the exterior thereof expands and presses against inner surfaces of the hollow of the article being formed. The at least one sheet of rigid material prevents the apparatus collapsing, thereby obviating the need for the frame 16 of the known assembly shown in Figures 1 and 2.

The flexible material may be elastomeric, and preferably includes a component of silicon (Si) - unlike the previously used castable rubbers. For example, the flexible material could be mosite rubber.

Conveniently, the relatively rigid material comprises carbon fibre composite material.

Optionally, the hollow article to be formed includes a top skin, a bottom skin and at least one support beam for connecting said top skin to said bottom skin, all of which comprise carbon fibre composite. For example, the hollow article to be formed is an aircraft wing.

Preferably, the apparatus is an expandable enclosure of substantially rectangular cross-section, and comprises four wall elements of relatively rigid material and four corner elements of flexible material, each of which connects contiguously to two of said wall elements.

According to a second aspect of the invention there is provided apparatus for forming an aircraft wing to a required shape from composite material , the wing including a top skin, a bottom skin and at least two support beams, each for connecting said top skin to said bottom skin and thereby forming a hollow, the apparatus being for insertion in use in the hollow, characterised in that the apparatus comprises a plurality of sheets of flexible material, a corresponding plurality of sheets of relatively rigid material, each of which is connected contiguously between a pair of said sheets of flexible material and an aperture formed in said contiguously connected sheets to form an expandable enclosure, the relatively rigid and the flexible sheets of which are respectively such that the enclosure does not collapse, and allows the exterior of the enclosure to press against the hollow when fluid pressure is applied via said aperture to the interior of the enclosure.

According to a third aspect of the invention there is provided a method of forming a hollow article to a required shape, the method including the steps of:
inserting in the hollow of the article a blow bag including at least one sheet of flexible material and at least one sheet of relatively rigid material connected contiguously thereto; and
applying fluid pressure to the interior of the blow bag such that the exterior thereof presses against the hollow of the article being formed.

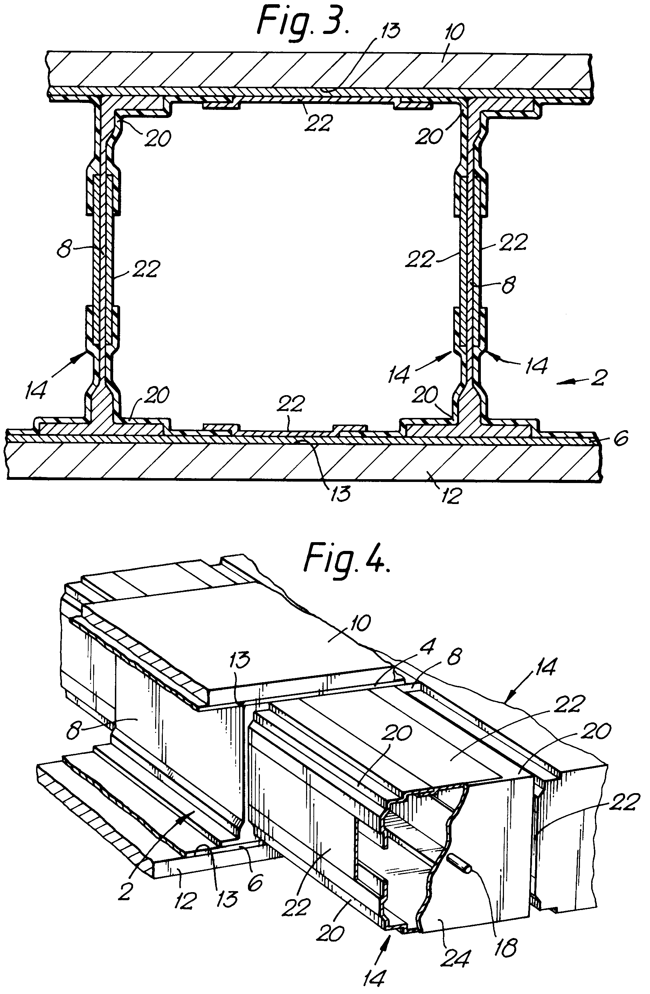

For a better understanding of the invention, an embodiment of it will now be described by way of example only, and with particular reference to the figures 3 and 4 of the accompanying drawings, of which:
Figure 1 is a part cross-sectional view showing in use known apparatus for the formation of a wing having a conventional blow bag;
Figure 2 shows a perspective view of part of the apparatus of Figure 1;
Figure 3 is a part cross-sectional view showing in use apparatus for the formation of a wing and having a blow bag in accordance with the present invention; and
Figure 4 shows a perspective view of part of the assembly of Figure 3.

To improve understanding of the drawings, like elements which appear in more than one figure are designed by the same reference number.

Referring to Figures 3 and 4, the wing 2 is assembled and positioned between two mould tools 10 and 12, which define the required shape and dimensions of the top and bottom skins 4 and 6, as described earlier with reference to Figures 1 and 2.

As before, blow bags 14 are positioned in the hollow regions between the skins 4 and 6 and adjacent pairs of support beams 8. However, in this case, each blow bag 14 is fabricated from four sheets 20 of a flexible elastomeric material and four sheets 22 of a relatively rigid material. The elastomeric material in this example is silicon (Si) rubber (or butile rubber) such as mosite. The sheets 20 form corner pieces of the blow bag 14. The sheets 20 are moulded to the required shape by a known method, and may then be painted with viton (which is a fluoroelastomer, available from Bostik) to prevent it adhering to the composite material of the wing. One method of forming the sheets 20 is to obtain them in the so-called "B" stage, i.e. only partially cured. This partially cured rubber is then formed under heat and pressure to the required shape. If the support beams 8 are sufficiently rigid, it may not be necessary to have the bags pre-formed. The support members' rigidity may be provided by having them partially cured prior to assembly of the wing. The four sheets 22 each connect a pair of the corner sheets 20 to form wall elements. These wall elements 22 are manufactured from carbon fibre composite in a conventional manner, and are fluid-tightedly bonded to the corner sheets 20 using silicon or epoxy resin, for example.

Each blow bag extends longitudinally between the skins 4 and 6 and a pair of support beams 8 and terminates at each end in an end face 24 which provides a fluid-tight seal. At least one of the end faces 24 includes an inlet/outlet nozzle 18.

Each blow bag thus comprises a semi-rigid rectangular box-like structure the dimensions of which are chosen to correspond closely to the interior dimensions of the enclosure, formed by the skins 4 and 6 and pair of support beams 8, into which, in use, it is to be inserted.

When the uncured composite wing assembly 2 is heated to the required temperature in an autoclave (not shown), fluid pressure (for example 100 psi) is applied to each nozzle 18, inflating the associated blow bag and, via the bags external surfaces, transmitting that pressure to the internal surfaces of the enclosure formed by the adjacent top and bottom skins 4 and 6, and support beam pair 8. Because the upper and lower mould tools 10 and 12 are fixed in relation to one another, this applied pressure results in the top and bottom skins 4 and 6 corresponding closely to the shape defined by the mould surfaces 13 of each of the mould tools, and further in their being spaced the correct distance apart. The action of adjacent blow bags 14 applying opposing pressures to opposite sides of that support beam 8 between them results in the beam 8 forming straight and upright, and running from the top skin 4 to the bottom skin 6.

After curing and forming, a partial vacuum is applied to each of the blow bags 14 via their respective inlet/outlet nozzles 18. This results in the blow bags 14 becoming, once more, a relatively loose fit within the internal wing surfaces, and allows their removal.

Conveniently, the top skin 4 may be attached to the support beams 8 by bolts, rather than by being bonded thereto during curing, thus allowing simpler fitting of various components in and to the wing, and easing repair work.

Adhesive may be used to securely bond the bottom skin 6 to the support beams 8.

## Claims

1. Apparatus for forming a hollow article to a required shape, the apparatus being for insertion in use in the hollow of the article, characterised in that the apparatus includes at least one sheet of flexible material (20), at least one sheet of relatively rigid material (22) connected contiguously to said at least one sheet of flexible material and an aperature (18) formed in said contiguously connected sheets so as to form an expandable enclosure (14) such that, in use, when fluid pressure is applied to the interior of the enclosure (14), the exterior thereof presses against the hollow of the article (2) being formed.

2. Apparatus according to claim 1, characterised in that the flexible material (20) is elastomeric.

3. Apparatus according to claim 1 or 2, characterised in that the flexible material (20) includes a component of silicon (Si).

4. Apparatus according to claim 1, 2 or 3, characterised in that the flexible material (20) comprises mosite rubber.

5. Apparatus according to any one of the preceding claims, characterised in that the relatively rigid material (22) comprises carbon fibre composite material.

6. Apparatus according to any one of the preceding claims, characterised in that the hollow article (2) to be formed includes a top skin (4), a bottom skin (6) and at least one support beam (8) for connecting said top skin (4) to said bottom skin (6), all of which comprise carbon fibre composite material.

7. Apparatus according to claim 6, characterised in that the hollow article (2) to be formed is an aircraft wing.

8. Apparatus according to any preceding claim, characterised in that the apparatus (14) is an expandable enclosure (14) of substantially rectangular cross-section, and comprises four wall elements (22) of relatively rigid material and four corner elements (20) of flexible material, each of which connects two of said wall elements.

9. Apparatus for forming an aircraft wing to a required shape from composite material, the wing including a top skin, a bottom skin and at least two support beams, each for connecting said top skin to said bottom skin and thereby forming a hollow, the apparatus being for insertion in use in the hollow, characterised in that the apparatus comprises a plurality of sheets of flexible material (20) a corresponding plurality of sheets of relatively rigid material (22), each of which is connected contiguously in use in the hollow, characterised in that the apparatus comprises a plurality of sheets of flexible material (20) a corresponding plurality of sheets of relatively rigid material (22), each of which is connected contiguously between a pair of said sheets of flexible material (20), and an aperature (18) formed in said contiguously connected sheets so as to form an expandable enclosure (14), the relatively rigid (22) and the flexible sheets (20) of which are respectively such that the enclosure (14) does not collapse, and allows the exterior of the enclosure to press against the hollow when fluid pressure is applied via said aperture (18) to the interior of the enclosure.

10. A method of forming a hollow article to a required shape, characterised in that the method includes the steps of:
inserting in the hollow of the article (2) a blow bag (14) including at least one sheet of flexible material (20) and at least one sheet of relatively rigid material (22) connected contiguously thereto; and
applying fluid pressure to the interior of the blow bag (14) such that the exterior thereof presses against the hollow of the article (2) being formed.
